# EUROPÄISCHE PATENTSCHRIFT

(11) **EP 3 877 680 B1**
(45) Veröffentlichungstag und Bekanntmachung des Hinweises auf die Patenterteilung: **03.04.2024**
(21) Anmeldenummer: 19789968.5
(22) Anmeldetag: 17.10.2019
(51) Int. Cl.: F16K 5/04, F01P 7/14, F16K 11/16

(54) **FLUIDTECHNISCHE VENTILEINRICHTUNG SOWIE VERFAHREN ZUM BETREIBEN EINER FLUIDTECHNISCHEN VENTILEINRICHTUNG**
FLUID VALVE DEVICE AND METHOD FOR OPERATING A FLUID VALVE DEVICE
DISPOSITIF DE SOUPAPE FLUIDIQUE ET PROCÉDÉ SERVANT À FAIRE FONCTIONNER UN DISPOSITIF DE SOUPAPE FLUIDIQUE

(30) Priorität: 08.11.2018 DE 102018219098
(43) Veröffentlichungstag der Anmeldung: 15.09.2021
(73) Patentinhaber: Audi AG, 85057 Ingolstadt (DE)
(72) Erfinder: HOFFMANN, Thomas, 93339 Riedenburg (DE)
(74) Vertreter: Dietz, Christopher Friedrich
(86) Internationale Anmeldenummer: PCT/EP2019/078193
(87) Internationale Veröffentlichungsnummer: WO 2020/094355

(56) Entgegenhaltungen:
- EP-A1- 3 232 102
- WO-A1-2015/030944
- WO-A1-2015/034576
- DE-A1- 2 805 692
- DE-A1-102009 020 187
- DE-A1-102011 119 237
- DE-A1-102016 102 583
- DE-A1-102017 209 481
- DE-B3-102017 218 864
- US-A1- 2015 027 575

## Beschreibung

Die Erfindung betrifft eine fluidtechnische Ventileinrichtung mit den Merkmalen des Oberbegriffs des Anspruchs 1 sowie ein Verfahren zum Betreiben einer solchen fluidtechnischen Ventileinrichtung mit den Merkmalen des Oberbegriffs des Anspruchs 7.

Aus dem Stand der Technik ist beispielsweise die Druckschrift DE 10 2013 010536 B3 bekannt. Diese beschreibt ein Ventil, das zwei in einem Ventilgehäuse angeordnete Ventilglieder aufweist, die durch eine Betätigungsstange betätigbar sind, die mittels einer elektrodynamischen Antriebseinrichtung antreibbar ist. Die elektrodynamische Antriebseinrichtung enthält eine Spuleneinrichtung, die koaxial und zugleich axial fest auf der Betätigungsstange sitzt, sodass sich die Betätigungsstange zur Betätigung der Ventilglieder linear in ihrer Längsrichtung bewegt. Die Druckschrift DE 10 2016 102583 A1 zeigt eine fluidtechnische Ventileinrichtung bei der beide Drehschieberventile durch jeweils einen Freilauf mit einem Antrieb gekoppelt sind.

Es ist Aufgabe der Erfindung, eine fluidtechnische Ventileinrichtung vorzuschlagen, welche gegenüber bekannten Ventileinrichtungen Vorteile aufweist, insbesondere auf einfache und flexible Art und Weise ein unabhängiges Einstellen mehrerer Ventile ermöglicht.

Dies wird erfindungsgemäß mit einer fluidtechnischen Ventileinrichtung mit den Merkmalen des Anspruchs 1 erreicht. Dabei ist vorgesehen, dass der Freilauf über das erste Drehschieberventil lediglich mittelbar mit der Antriebswelle gekoppelt ist.

Die fluidtechnische Ventileinrichtung dient dem Einstellen einer Durchströmungsquerschnittsfläche, also der Größe eines Durchströmungsquerschnitts, zwischen wenigstens einem Fluideinlass und wenigstens einem Fluidauslass der Ventileinrichtung. Beispielsweise weist die Ventileinrichtung mindestens so viele Fluidauslässe wie Fluideinlässe auf, wobei jedem der Fluideinlässe wenigstens einer der Fluidauslässe oder mehrere der Fluidauslässe zugeordnet sind. Es kann also vorgesehen sein, dass mithilfe der Ventileinrichtung die Durchströmungsquerschnittsfläche zwischen genau einem Fluideinlass und genau einem Fluidauslass oder die jeweilige Durchströmungsquerschnittsfläche zwischen jedem der Fluideinlässe und dem dazugehörigen wenigstens einen der Fluidauslässe eingestellt werden kann.

Besonders bevorzugt weist die Ventileinrichtung einen Fluideinlass und mehrere diesem Fluideinlass zugeordnete Fluidauslässe auf, wobei in Abhängigkeit von einer Einstellung der Ventileinrichtung das an dem Fluideinlass bereitgestellte Fluid keinem der Fluidauslässe, ausschließlich einem einzigen der Fluidauslässe oder mehreren der Fluidauslässe zugeführt wird. Das bedeutet, dass in Abhängigkeit von der Einstellung der Ventileinrichtung zwischen dem Fluideinlass und jedem der Fluidauslässe jeweils eine bestimmte Durchströmungsquerschnittsfläche eingestellt wird, welche jeweils von Null verschieden sein, aber zum Versperren der jeweiligen Fluidverbindung zwischen dem Fluideinlass und dem entsprechenden Fluidauslass auch gleich Null betragen kann.

Die Ventileinrichtung verfügt zum Einstellen der Durchströmungsquerschnittsfläche zwischen dem jeweiligen Fluideinlass und dem jeweiligen Fluidauslass über mehrere Drehschieberventile, nämlich über das erste Drehschieberventil und das zweite Drehschieberventil. Jedes dieser Drehschieberventile weist wiederum einen Drehschieber auf, der in dem jeweiligen Drehschiebergehäuse angeordnet ist. Die Drehschiebergehäuse der Drehschieber können selbstverständlich auch als gemeinsames Drehschiebergehäuse ausgestaltet sein. Der Drehschieber ist in dem Drehschiebergehäuse um eine Drehachse drehbar gelagert.

Jedes der Drehschieberventile verfügt über wenigstens einen Einlass und wenigstens einen Auslass. In Abhängigkeit von der Drehwinkelstellung des Drehschiebers in dem Drehschiebergehäuse liegt eine bestimmte Durchströmungsquerschnittsfläche zwischen dem Einlass und dem Auslass vor. Es kann nun beispielsweise vorgesehen sein, dass die Einlässe der Drehschieberventile strömungstechnisch unabhängig voneinander mit separaten Fluideinlässen der Ventileinrichtung strömungstechnisch verbunden sind, und dass analog hierzu die Auslässe der Drehschieberventile strömungstechnisch unabhängig voneinander mit Fluidauslässen der Ventileinrichtung strömungstechnisch verbunden sind.

Es kann jedoch auch vorgesehen sein, dass die Einlässe der Drehschieberventile jeweils mit dem einen Fluideinlass der Ventileinrichtung strömungstechnisch verbunden sind, sodass die Drehschieberventile eingangsseitig jeweils an den Fluideinlass der Ventileinrichtung angeschlossen sind. Die Auslässe der Drehschieberventile sind bevorzugt jeweils strömungstechnisch unabhängig voneinander mit Fluidauslässen der Ventileinrichtung strömungstechnisch verbunden, insbesondere jeder der Auslässe mit genau einem der Fluidauslässe. Selbstverständlich kann es jedoch auch hier vorgesehen sein, dass die Auslässe mehrerer der Drehschieberventile oder aller Drehschieberventile mit einem der Fluidauslässe beziehungsweise dem einen Fluidauslass der Ventileinrichtung strömungstechnisch verbunden sind.

Beispielsweise liegt in einer ersten Drehwinkelstellung des Drehschiebers eine Fluidverbindung mit einer ersten Durchströmungsquerschnittsfläche zwischen dem jeweiligen Einlass und dem jeweiligen Auslass vor, wohingegen in einer zweiten Drehwinkelstellung die Fluidverbindung mit einer von der ersten Durchströmungsquerschnittsfläche verschiedenen zweiten Durchströmungsquerschnittsfläche vorliegt. Beispielsweise liegt also in der ersten Drehwinkelstellung des Drehschiebers eine Fluidverbindung mit einer ersten Durchströmungsquerschnittsfläche zwischen dem Fluideinlass und einem ersten der Fluidauslässe vor, wohingegen ein zweiter der Fluidauslässe strömungstechnisch von dem Fluideinlass entkoppelt ist. In der zweiten Drehwinkelstellung ist hingegen der erste Fluidauslass strömungstechnisch von dem Fluideinlass entkoppelt, wohingegen der zweite der Fluidauslässe mit einer bestimmten zweiten Durchströmungsquerschnittsfläche in Strömungsverbindung mit dem Fluideinlass steht. Die erste Durchströmungsquerschnittsfläche und die zweite Durchströmungsquerschnittsfläche können hierbei denselben Wert aufweisen oder aber voneinander verschieden sein.

Es kann also vorgesehen sein, dass die mehreren Drehschieberventile an denselben Fluideinlass der Ventileinrichtung strömungstechnisch angeschlossen sind, sodass mithilfe der Drehschieberventile das an dem Fluideinlass bereitgestellte Fluid auf mehrere Fluidauslässe verteilt werden kann. Es kann jedoch auch vorgesehen sein, dass jedes der Drehschieberventile einen separaten Fluideinlass aufweist, sodass die vorstehenden Ausführungen für jedes der Drehschieberventile beziehungsweise jeden der Drehschieber herangezogen werden können.

Das Einstellen der Ventileinrichtung, also das Betätigen beziehungsweise Drehen der Drehschieber innerhalb des Drehschiebergehäuses, erfolgt mittels des Stellmotors. An den Stellmotor, insbesondere an eine Motorwelle des Stellmotors, ist die Antriebswelle angeschlossen, über welche der Stellmotor den jeweiligen Drehschieber antreiben kann. Der Stellmotor liegt vorzugsweise als Elektromotor vor. Auch andere Arten von Motoren können jedoch grundsätzlich Anwendung finden.

Die Drehschieber der Drehschieberventile sind mittels des Stellmotors, also desselben Stellmotors, antreibbar, insbesondere selektiv antreibbar. Hierzu ist die Antriebswelle starr mit dem ersten Drehschieberventil beziehungsweise dem Drehschieber des ersten Drehschieberventils gekoppelt. Das zweite Drehschieberventil beziehungsweise der Drehschieber des zweiten Drehschieberventils ist jedoch über den Freilauf mit der Antriebswelle gekoppelt, also lediglich mittelbar. Das bedeutet, dass eine Drehbewegung der Antriebswelle unabhängig von einer Drehrichtung der Antriebswelle stets auf das erste Drehschieberventil übertragen wird. Die Kopplung zwischen dem zweiten Drehschieberventil und der Antriebswelle ist hingegen von der Drehrichtung der Antriebswelle abhängig. Bei einer ersten Drehrichtung der Antriebswelle stellt der Freilauf eine starre Verbindung zwischen der Antriebswelle und dem zweiten Drehschieberventil her. Bei einer der ersten Drehrichtung entgegengesetzten zweiten Drehrichtung entkoppelt der Freilauf hingegen das zweite Drehschieberventil von der Antriebswelle.

Bei der ersten Drehrichtung ist also das zweite Drehschieberventil drehfest mit der Antriebswelle gekoppelt, sodass der Drehschieber des zweiten Drehschieberventils mittels des Stellmotors verlagert werden kann beziehungsweise verlagert wird. Liegt die zweite Drehrichtung vor, ist also das zweite Drehschieberventil von der Antriebswelle entkoppelt, so verbleibt er auch bei einer Drehbewegung des Stellmotors und mithin der Antriebswelle in seiner momentan vorliegenden Drehwinkelstellung. In anderen Worten liegt der Drehschieber des zweiten Drehschieberventils drehfest in dem Drehschiebergehäuse vor, falls beziehungsweise solange er von der Antriebswelle entkoppelt ist. Hierzu liegt beispielsweise zwischen dem Drehschieber und dem Drehschiebergehäuse eine ausreichende Reibung vor.

Sofern im Rahmen dieser Beschreibung von lediglich einem Drehschieberventil und/oder einem Drehschieber die Rede ist, so sind die entsprechenden Ausführungen für alle Drehschieberventile und/oder Drehschieber der fluidtechnischen Fluideinrichtung übertragbar, insbesondere sofern auf nichts anderes hingewiesen wird. Mit der beschriebenen Ausgestaltung der fluidtechnischen Ventileinrichtung können zahlreiche Vorteile erzielt werden. So können die Drehschieberventile unabhängig voneinander eingestellt werden, nämlich durch Verlagern des Drehschiebers des ersten Drehschieberventils unabhängig von dem Drehschieber des zweiten Drehschieberventils.

Zudem ist für das realisierte, flexible Verlagern beziehungsweise Drehen der Drehschieber lediglich der gemeinsame Stellmotor vorgesehen, welcher insbesondere als einziger Stellmotor der fluidtechnischen Einrichtung vorliegt. Es ist also kein weiterer Stellmotor vorgesehen, mittels welchen die Drehschieber antreibbar sind. Das wahlweise Antreiben des Drehschieberventils erfolgt auf konstruktiv einfach umzusetzende Art und Weise, nämlich durch die Verwendung des Freilaufs.

Die Lagerung der Drehschieber der Drehschieberventile in dem Drehschiebergehäuse beziehungsweise dem jeweiligen Drehschiebergehäuse kann grundsätzlich beliebig ausgestaltet sein. Beispielsweise sind die Drehschieber radial auf der Antriebswelle gelagert und axial mittels wenigstens eines Dichtungspakets, welches dichtend mit den Drehschiebern zusammenwirkt. Auch eine radiale und axiale Lagerung mittels dieser Dichtungspakete kann realisiert sein. Die Dichtungspakete sind bevorzugt in Richtung des jeweiligen Drehschiebers federkraftbeaufschlagt, sodass auch ein Ausgleich von Toleranzen erfolgt beziehungsweise erfolgen kann.

Erfindungsgemäß ist der Freilauf über das erste Drehschieberventil lediglich mittelbar mit der Antriebswelle gekoppelt. Der Freilauf ist eingangsseitig unmittelbar oder mittelbar an die Antriebswelle angeschlossen beziehungsweise mit ihr gekoppelt. Ausgangsseitig ist er mit dem zweiten Drehschieberventil gekoppelt, wobei diese Kopplung ebenfalls unmittelbar oder mittelbar vorliegen kann. Bevorzugt greift der Freilauf ausgangsseitig jedoch unmittelbar an dem zweiten Drehschieberventil beziehungsweise seinem Drehschieber an. Ist der Freilauf unmittelbar mit der Antriebswelle gekoppelt, so wird er direkt von der Antriebswelle angetrieben, zumindest jedoch nicht über das erste Drehschieberventil beziehungsweise seinen Drehschieber.

Im Falle der mittelbaren Kopplung ist der Freilauf über das erste Drehschieberventil beziehungsweise seinen Drehschieber antriebstechnisch an die Antriebswelle angeschlossen. Das bedeutet, dass eine Drehbewegung der Antriebswelle lediglich über das erste Drehschieberventil beziehungsweise den Drehschieber des ersten Drehschieberventils an das zweite Drehschieberventil übertragen wird. Die beschriebene Ausgestaltung der fluidtechnischen Ventileinrichtung ist technisch einfach realisierbar und kostengünstig umsetzbar. Im Rahmen einer weiteren bevorzugten Ausführungsform der Erfindung ist vorgesehen, dass das erste Drehschieberventil eine erste Kopplungseinrichtung und das zweite Drehschieberventil eine zweite Kopplungseinrichtung aufweist, wobei die erste Kopplungseinrichtung und die zweite Kopplungseinrichtung jeweils mit dem Freilauf gekoppelt sind. Über die beiden Kopplungseinrichtungen, also die erste Kopplungseinrichtung und die zweite Kopplungseinrichtung, ist insoweit die lediglich mittelbare Anbindung des Freilaufs an die Antriebswelle realisiert. Hierzu greift der Freilauf eingangsseitig über die erste Kopplungseinrichtung an dem ersten Drehschieberventil an. Ausgangsseitig ist der Freilauf über die zweite Kopplungseinrichtung mit dem zweiten Drehschieberventil gekoppelt. Die Kopplungseinrichtungen können jeweils grundsätzlich beliebig ausgestaltet sein. Besonders bevorzugt weisen sie jeweils eine Verzahnung auf beziehungsweise liegen in Form einer Verzahnung vor. Die Verwendung der Kopplungseinrichtungen ermöglicht einen besonders einfachen Aufbau der Ventileinrichtung und eine zuverlässige Anbindung der Drehschieberventile an die Antriebswelle.

Eine Weiterbildung der Erfindung sieht vor, dass die erste Kopplungseinrichtung mit einem mit der Antriebswelle gekoppelten Eingang des Freilaufs und die zweite Kopplungseinrichtung mit einem Ausgang des Freilaufs gekoppelt ist. In anderen Worten ist der Freilauf eingangsseitig über die erste Kopplungseinrichtung mit der Antriebswelle und ausgangsseitig über die zweite Kopplungseinrichtung mit dem zweiten Drehschieberventil verbunden. Das bedeutet, dass das zweite Drehschieberventil beziehungsweise sein Drehschieber ausschließlich über die zweite Kopplungseinrichtung, den Freilauf, die erste Kopplungseinrichtung und das erste Drehschieberventil an die Antriebswelle angebunden ist.

Hierdurch wird eine besonders große Flexibilität der fluidtechnischen Ventileinrichtung, insbesondere auch hinsichtlich der Anordnung der beiden Drehschieberventile zueinander, erzielt. Beispielsweise können die beiden Drehschieberventile koaxial zueinander angeordnet sein, sodass also Drehachsen ihrer Drehschieber zusammenfallen. Alternativ kann es auch vorgesehen sein, dass die Drehschieberventile derart angeordnet sind, dass die Drehachsen ihre Drehschieber beabstandet parallel voneinander vorliegen oder windschief zueinander angeordnet sind.

Eine bevorzugte weitere Ausführungsform der Erfindung sieht vor, dass die erste Kopplungseinrichtung über die Antriebswelle mit einem Eingang des Freilaufs oder über eine Eingangskopplungseinrichtung des Eingangs des Freilaufs mit der Antriebswelle gekoppelt ist. In ersterem Fall ist der Eingang des Freilaufs vorzugsweise unmittelbar an die Antriebswelle angeschlossen. Die erste Kopplungseinrichtung dient in diesem Fall beispielsweise der Herstellung einer unmittelbaren Verbindung zwischen der Antriebswelle und dem ersten Drehschieberventil. Der Freilauf ist insoweit lediglich mittelbar mit dem ersten Drehschieberventil gekoppelt, nämlich über die Antriebswelle.

Im Falle der Kopplung der ersten Kopplungseinrichtung mit der Antriebswelle über die Eingangskopplungseinrichtung ist das erste Drehschieberventil lediglich mittelbar mit der Antriebswelle verbunden, nämlich über den Eingang des Freilaufs. Das bedeutet, dass der Freilauf eingangsseitig sowohl an die Antriebswelle als auch an das erste Drehschieberventil angeschlossen ist, sodass eine Drehbewegung der Antriebswelle auf die Eingangskopplungseinrichtung und über diese auf das erste Drehschieberventil beziehungsweise seinen Drehschieber übertragen wird. Die beschriebenen Ausgestaltungen der Ventileinrichtung ermöglicht eine besonders flexible Anordnung der Drehschieberventile zueinander.

Eine weitere Ausführungsform der Erfindung sieht vor, dass die erste Kopplungseinrichtung zumindest zeitweise mit der Antriebswelle und/oder der Eingangskopplungseinrichtung des Freilaufs und die zweite Kopplungseinrichtung permanent mit einer Ausgangskopplungseinrichtung des Freilaufs unmittelbar gekoppelt ist. Darunter ist zu verstehen, dass das zweite Drehschieberventil permanent mit dem Freilauf gekoppelt ist, der Freilauf jedoch nicht notwendigerweise permanent an die Antriebswelle und/oder das erste Drehschieberventil angebunden ist. So kann es beispielsweise vorgesehen sein, dass der Freilauf eingangsseitig lediglich zeitweise über die Antriebswelle von dem Stellmotor angetrieben wird, insbesondere auch während dieser zum Antreiben des ersten Drehschieberventils verwendet wird.

Das bedeutet, dass eine Drehbewegung der Antriebswelle, welche auf ein Antreiben des ersten Drehschieberventils gerichtet ist, nicht permanent, sondern lediglich zeitweise, dem eingangsseitigen Antreiben des Freilaufs dient. Beispielsweise sind hierzu die erste Kopplungsseite und/oder die Eingangskopplungseinrichtung entsprechend ausgestaltet. Liegen die erste Kopplungseinrichtung und/oder die Eingangskopplungseinrichtung als Verzahnung vor beziehungsweise weisen eine solche auf, so kann die Verzahnung unterbrochen sein, um lediglich zeitweise das Antreiben des Freilaufs zu realisieren. Dies ermöglicht einen besonders flexiblen Betrieb der fluidtechnischen Ventileinrichtung.

Schließlich kann im Rahmen einer weiteren bevorzugten Ausgestaltung der Erfindung vorgesehen sein, dass die erste Kopplungseinrichtung, die zweite Kopplungseinrichtung, die Eingangskopplungseinrichtung und die Ausgangskopplungseinrichtung jeweils eine Verzahnung aufweisen oder als eine solche ausgebildet sind. Wenigstens eine der nachfolgenden Einrichtungen ist insoweit als Verzahnung ausgebildet oder weist eine solche auf: erste Kopplungseinrichtung, zweite Kopplungseinrichtung, Eingangskopplungseinrichtung und Ausgangskopplungseinrichtung. Dies gilt lediglich für diejenigen Kopplungseinrichtungen, welche tatsächlich im Rahmen der fluidtechnischen Ventileinrichtung vorliegen. Die Verwendung der Verzahnung ermöglicht eine besonders zuverlässige Kopplung der Drehschieberventile mit der Antriebswelle.

Die Erfindung betrifft weiterhin ein Verfahren zum Betreiben einer fluidtechnischen Ventileinrichtung nach Anspruch 7, insbesondere zum Betreiben einer fluidtechnischen Ventileinrichtung gemäß den Ausführungen im Rahmen dieser Beschreibung, wobei die fluidtechnische Ventileinrichtung über ein erstes Drehschieberventil, ein zweites Drehschieberventil und einen Stellmotor verfügt, wobei jedes der Drehschieberventile einen in einem Drehschiebergehäuse angeordneten und über eine Antriebswelle mittels des Stellmotors antreibbaren Drehschieber aufweist, wobei das erste Drehschieberventil starr und das zweite Drehschieberventil über einen Freilauf mit der Antriebswelle gekoppelt ist, und wobei mittels des Stellmotors das erste Drehschieberventil auf einen ersten Sollwert und das zweite Drehschieberventil auf einen zweiten Sollwert eingestellt wird. Dabei ist vorgesehen, dass der Freilauf über das erste Drehschieberventil lediglich mittelbar mit der Antriebswelle gekoppelt ist.

Auf die Vorteile einer derartigen Vorgehensweise beziehungsweise einer derartigen Ausgestaltung der fluidtechnischen Einrichtung wird bereits hingewiesen. Sowohl die fluidtechnische Ventileinrichtung als auch das Verfahren zu ihrem Betreiben können gemäß den Ausführungen im Rahmen dieser Beschreibung weitergebildet sein, sodass insoweit auf diese verwiesen wird.

Eine weitere Ausführungsform der Erfindung sieht vor, dass zunächst das Einstellen des zweiten Drehschieberventils durch Drehen der Antriebswelle entgegen einer Freilaufrichtung des Freilaufs und anschließend das Einstellen des ersten Drehschieberventils durch Drehen der Antriebswelle in Freilaufrichtung erfolgt. Jedes der Drehschieberventile ist vorzugsweise durchgehend drehbar, kann also zum Einstellen auf den gewünschten Sollwert beliebig in wenigstens eine Drehrichtung gedreht werden, insbesondere um mehr als 360°. Hierdurch wird eine besonders hohe Flexibilität des beschriebenen Verfahrens zum Betreiben der fluidtechnischen Ventileinrichtung erzielt. Es ist nämlich möglich, zunächst das zweite Drehschieberventil auf den zweiten Sollwert einzustellen, indem die Antriebswelle entgegen der Freilaufrichtung des Freilaufs gedreht wird.

Das bedeutet, dass mittels des Stellmotors sowohl das erste Drehschieberventil als auch das zweite Drehschieberventil angetrieben und entgegen der Freilaufrichtung gedreht werden. Unter der Freilaufrichtung ist diejenige Drehrichtung des Freilaufs zu verstehen, bei welcher ein Ausgang des Freilaufs von seinem Eingang entkoppelt ist, also schlussendlich bei welcher das zweite Drehschieberventil von dem Stellmotor beziehungsweise der Antriebswelle entkoppelt ist. Liegt das zweite Drehschieberventil bei dem zweiten Sollwert vor, wird anschließend das erste Drehschieberventil - falls notwendig - auf den ersten Sollwert eingestellt, nämlich durch Drehen der Antriebswelle in Freilaufrichtung.

Bei diesem Drehen der Antriebswelle in Freilaufrichtung wird nur das erste Drehschieberventil, nicht jedoch das zweite Drehschieberventil verstellt beziehungsweise gedreht. Das zweite Drehschieberventil verbleibt vielmehr auf dem zweiten Sollwert. Das Drehen der Antriebswelle in Freilaufrichtung erfolgt, bis auch das erste Drehschieberventil auf seinen Sollwert, nämlich den ersten Sollwert, eingestellt ist. Das unabhängige Drehen der beiden Drehschieberventile voneinander ermöglicht ein besonders flexibles Einstellen der fluidtechnischen Ventileinrichtung.

Eine weitere Ausgestaltung der Erfindung sieht vor, dass zum Einstellen des zweiten Drehschieberventils auf den zweiten Sollwert der Stellmotor derart betrieben wird, dass das erste Drehschieberventil abwechselnd in gegenläufige Richtungen auf von dem ersten Sollwert abweichende Werte eingestellt wird, bis der zweite Sollwert für das zweite Drehschieberventil vorliegt. Bei einer derartigen Vorgehensweise wird zunächst das erste Drehschieberventil auf den ersten Sollwert eingestellt. Das Einstellen des zweiten Drehschieberventils auf den zweiten Sollwert erfolgt erst anschließend. Zu diesem Einstellen des zweiten Drehschieberventils auf den zweiten Sollwert wird nach dem Einstellen des ersten Drehschieberventils auf den ersten Sollwert die Antriebswelle mittels des Stellmotors abwechselnd in gegenläufige Richtungen gedreht, sodass sich auch das erste Drehschieberventil in gegenläufige Richtungen bewegt und auf die von dem ersten Sollwert abweichende Werte eingestellt wird.

Hierbei wird die Antriebswelle abwechselnd in Freilaufrichtung und entgegen der Freilaufrichtung gedreht. Bei Drehen der Antriebswelle in der Freilaufrichtung verbleibt das zweite Drehschieberventil bei seiner momentanen Einstellung. Während des Drehens der Antriebswelle entgegen der Freilaufrichtung wird jedoch das zweite Drehschieberventil in Richtung des zweiten Sollwerts verstellt, bis es den zweiten Sollwert erreicht hat. Die von dem ersten Sollwert abweichenden Werte, auf welche das erste Drehschieberventil während des Einstellens des zweiten Drehschieberventils auf den zweiten Sollwert abwechselnd eingestellt wird, sind vorzugsweise derart gewählt, dass die effektive Durchströmungsquerschnittsfläche des ersten Drehschieberventils nicht oder allenfalls lediglich geringfügig verändert wird.

Besonders bevorzugt sind die Werte also derart gewählt, dass die Durchströmungsquerschnittsfläche des ersten Drehschieberventils während des Einstellens des zweiten Drehschieberventils auf den zweiten Sollwert konstant bleibt. Ist dies nicht möglich, so ist eine Abweichung der Durchströmungsquerschnittsfläche vorzugsweise auf höchstens 25 %, höchstens 20 %, höchstens 15 %, höchstens 10 % oder höchstens 5 % bezogen auf die bei dem ersten Sollwert vorliegende Durchströmungsquerschnittsfläche zugelassen. Mit der beschriebenen Vorgehensweise wird nach dem Einstellen des ersten Drehschieberventils auf den ersten Sollwert ein schrittweises Einstellen des zweiten Drehschieberventils auf den zweiten Sollwert erzielt. Entsprechend ist ein vollständig unabhängiges Einstellen der beiden Drehschieberventile voneinander möglich.

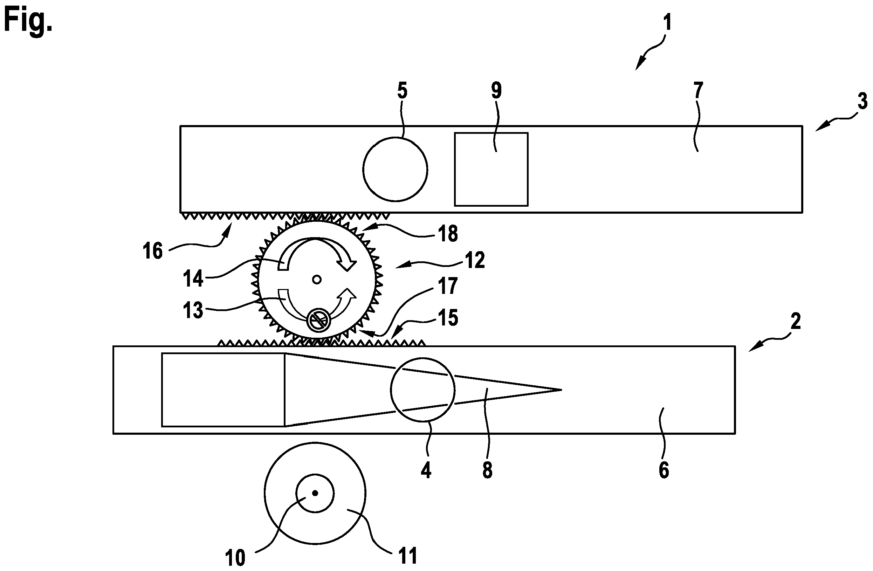

Die Erfindung wird nachfolgend anhand der in der Zeichnung dargestellten Ausführungsbeispiele näher erläutert. Dabei zeigt die einzige
- Figur: eine schematische Darstellung einer fluidtechnischen Ventileinrichtung mit einem ersten Drehschieberventil und einem zweiten Drehschieberventil, die über einen Freilauf miteinander gekoppelt sind.

Die Figur zeigt eine schematische Darstellung einer fluidtechnischen Ventileinrichtung 1, die ein erstes Drehschieberventil 2 und ein zweites Drehschieberventil 3 aufweist. Von den Drehschieberventilen 2 und 3 sind jeweils lediglich ein Einlass 4 beziehungsweise 5 sowie ein Drehschieber 6 beziehungsweise 7 gezeigt, wobei die Drehschieber 6 und 7 in in Umfangsrichtung abgerollter Form gezeigt sind. Das bedeutet, dass von den Drehschiebern 6 und 7 lediglich eine äußere Mantelfläche über den gesamten Umfang des jeweiligen Drehschiebers 6 beziehungsweise 7 hinweg gezeigt ist.

In dem Drehschieber 6 liegt eine Stellöffnung 8 und in dem Drehschieber 7 eine Stellöffnung 9 vor. Diese können grundsätzlich beliebig ausgestaltet sein. In dem hier dargestellten Ausführungsbeispiel sind die Stellöffnungen 8 und 9 mit unterschiedlicher Gestalt ausgebildet. Sie können jedoch auch dieselbe Gestalt aufweisen. In Abhängigkeit von einer Überdeckung des Einlasses 4 mit der Stellöffnung 8 beziehungsweise des Einlasses 5 mit der Stellöffnung 9 wird ein bestimmter Durchströmungsquerschnitt beziehungsweise eine bestimmte Durchströmungsquerschnittsfläche für das jeweilige Drehschieberventil 2 beziehungsweise 3 eingestellt. Je größer die Überdeckung zwischen dem Einlass 4 und der Stellöffnung 8 beziehungsweise dem Einlass 5 und der Stellöffnung 9 ist, umso größer ist der für das jeweilige Drehschieberventil 2 beziehungsweise 3 vorliegende Durchströmungsquerschnitt beziehungsweise die entsprechende Durchströmungsquerschnittsfläche.

Das erste Drehschieberventil 2 beziehungsweise der Drehschieber 6 des ersten Drehschieberventils 2 ist mittels eines Stellmotors 10 unmittelbar antreibbar, nämlich über eine Antriebswelle 11, die einerseits mit dem Stellmotor 10 und andererseits mit dem Drehschieber 6 gekoppelt ist. Beispielsweise greift die Antriebswelle 11 über eine hier nicht dargestellte Verzahnung an dem Drehschieber 6 an. Das erste Drehschieberventil 2 beziehungsweise sein Drehschieber 6 ist insoweit starr mit der Antriebswelle 11 gekoppelt. Das zweite Drehschieberventil 3 beziehungsweise sein Drehschieber 7 ist hingegen lediglich mittelbar über einen Freilauf 12 mit der Antriebswelle 11 gekoppelt.

In dem hier dargestellten Ausführungsbeispiel ist das zweite Drehschieberventil 3 über den Freilauf 12 mit dem ersten Drehschieberventil 12 und über dieses wiederum mit der Antriebswelle 11 gekoppelt. Ein Pfeil 13 zeigt eine Freilaufrichtung des Freilaufs 12 und ein Pfeil 14 die der Freilaufrichtung entgegengesetzte Drehrichtung an. Aufgrund des zwischen den Drehschieberventilen 2 und 3 vorliegenden Freilaufs 12 wird lediglich eine Drehbewegung des ersten Drehschieberventils 12 entgegen der Freilaufrichtung des Freilaufs 12 auf das zweite Drehschieberventil 3 übertragen. Eine Drehbewegung des ersten Drehschieberventils 2 in der Freilaufrichtung bewirkt keine Drehbewegung des Drehschieberventils 3, sodass dieses ortsfest verbleibt.

Zur Kopplung der Drehschieberventile 2 und 3 mit dem Freilauf 12 weist das erste Drehschieberventil 2 eine erste Kopplungseinrichtung 15 und das zweite Drehschieberventil 3 eine zweite Kopplungseinrichtung 16 auf. Diese liegen in dem hier dargestellten Ausführungsbeispiel als Verzahnungen vor. Diese sind beispielsweise in axialer Richtung bezüglich einer Drehachse des Freilaufs 12 gegeneinander versetzt angeordnet. Die Kopplungseinrichtungen 15 und 16 können grundsätzlich beliebig ausgestaltet sein, insbesondere in Form von Wellen vorliegen, die die Drehschieberventile 2 und 3 jeweils mit dem Freilauf 12 verbinden. Über den Freilauf 12 sind die Kopplungseinrichtungen 15 und 16 derart miteinander verbunden, dass bei einer Drehbewegung der Kopplungseinrichtungen 15 und 16 relativ zueinander in einer Richtung eine Kopplung zwischen ihnen vorliegt und sie bei einer Drehbewegung in einer der Richtung entgegen gerichteten Richtung voneinander entkoppelt sind. Die erste Kopplungseinrichtung 15 wirkt zum Koppeln des ersten Drehschieberventils 2 mit dem Freilauf 12 mit einer Eingangskopplungseinrichtung 17 des Freilaufs zusammen.

Zur Kopplung des Freilaufs 12 mit dem zweiten Drehschieberventil 3 wirkt die zweite Kopplungseinrichtung 16 hingegen mit einer Ausgangskopplungseinrichtung 18 des Freilaufs 12 zusammen. Auch die Kopplungseinrichtungen 17 und 18 liegen beispielsweise in Form von Verzahnungen vor. Entsprechend kämmt die Verzahnung der ersten Kopplungseinrichtung 15 mit der Verzahnung der Eingangskopplungseinrichtung 17 und die Verzahnung der zweiten Kopplungseinrichtung 16 mit der Verzahnung der Ausgangskopplungseinrichtung 18. Die Eingangskopplungseinrichtung 17 und die Ausgangskopplungseinrichtung 18 sind zur Realisierung des Freilaufs 12 derart antriebstechnisch miteinander verbunden, dass bei einer Drehbewegung relativ zueinander in einer Richtung eine Kopplung vorliegt. Bei einer der Richtung entgegen gerichteten Richtung sind die hingegen voneinander entkoppelt.

Besonders bevorzugt ist im Rahmen eines Betriebsverfahrens der fluidtechnischen Ventileinrichtung 1 vorgesehen, zunächst das erste Drehschieberventil 2 mittels des Stellmotors 10 auf einen ersten Sollwert einzustellen. Anschließend erfolgt das Einstellen des zweiten Drehschieberventils 3 auf einen zweiten Sollwert durch abwechselnd in gegenläufige Richtungen erfolgendes Antreiben des ersten Drehschieberventils 2 mittels des Stellmotors 10. Das bedeutet, dass das erste Drehschieberventil 2 abwechselnd auf von dem ersten Sollwert abweichende Werte eingestellt wird, wodurch ein schrittweises Verstellen des zweiten Drehschieberventils 3 in Richtung des zweiten Sollwerts erzielt wird. Die von dem ersten Sollwert abweichenden Werte sind vorzugsweise derart gewählt, dass eine bei dem ersten Sollwert vorliegende Durchströmungsquerschnittsfläche des ersten Drehschieberventils 2 nicht oder allenfalls unmaßgeblich verändert wird.

Mit der beschriebenen Ausgestaltung der fluidtechnischen Ventileinrichtung sowie - bevorzugt - dem beschriebenen Betriebsverfahren ist ein besonders flexibles Einstellen der Drehschieberventile 2 und 3, im Wesentlichen unabhängig voneinander, möglich.

## Patentansprüche

1. Fluidtechnische Ventileinrichtung (1), die über ein erstes Drehschieberventil (2), ein zweites Drehschieberventil (3) und einen Stellmotor (10) verfügt, wobei jedes der Drehschieberventile (2,3) einen in einem Drehschiebergehäuse angeordneten und über eine Antriebswelle (11) mittels des Stellmotors (10) antreibbaren Drehschieber (6,7) aufweist, wobei das erste Drehschieberventil (2) starr und das zweite Drehschieberventil (3) über einen Freilauf (12) mit der Antriebswelle (11) gekoppelt ist, **dadurch gekennzeichnet, dass** der Freilauf (12) über das erste Drehschieberventil (2) lediglich mittelbar mit der Antriebswelle (11) gekoppelt ist.

2. Fluidtechnische Ventileinrichtung nach Anspruch 1, **dadurch gekennzeichnet, dass** das erste Drehschieberventil (2) eine erste Kopplungseinrichtung (15) und das zweite Drehschieberventil (3) eine zweite Kopplungseinrichtung (16) aufweist, wobei die erste Kopplungseinrichtung (15) und die zweite Kopplungseinrichtung (16) jeweils mit dem Freilauf (12) gekoppelt sind.

3. Fluidtechnische Ventileinrichtung nach Anspruch 2, **dadurch gekennzeichnet, dass** die erste Kopplungseinrichtung (15) mit einem mit der Antriebswelle (11) gekoppelten Eingang des Freilaufs (12) und die zweite Kopplungseinrichtung (16) mit einem Ausgang des Freilaufs (12) gekoppelt ist.

4. Fluidtechnische Ventileinrichtung nach einem der vorhergehenden Ansprüche, **dadurch gekennzeichnet, dass** die erste Kopplungseinrichtung (15) über die Antriebswelle (11) mit dem Eingang des Freilaufs (12) oder über eine Eingangskopplungseinrichtung (17) des Eingangs des Freilaufs (12) mit der Antriebswelle (11) gekoppelt ist.

5. Fluidtechnische Ventileinrichtung nach Anspruch 4, **dadurch gekennzeichnet, dass** die erste Kopplungseinrichtung (15) zumindest zeitweise mit der Antriebswelle (11) und/oder der Eingangskopplungseinrichtung (17) des Freilaufs (12) und die zweite Kopplungseinrichtung (16) permanent mit einer Ausgangskopplungseinrichtung (18) des Freilaufs (12) unmittelbar gekoppelt ist.

6. Fluidtechnische Ventileinrichtung nach Anspruch 5, **dadurch gekennzeichnet, dass** die erste Kopplungseinrichtung (15), die zweite Kopplungseinrichtung (16), die Eingangskopplungseinrichtung (17) und die Ausgangskopplungseinrichtung (18) jeweils eine Verzahnung aufweisen oder als eine solche ausgebildet sind.

7. Verfahren zum Betreiben einer fluidtechnischen Ventileinrichtung (1), insbesondere einer fluidtechnischen Fluideinrichtung (1) nach einem oder mehreren der vorhergehenden Ansprüche, wobei die fluidtechnische Ventileinrichtung (1) über ein erstes Drehschieberventil (2), ein zweites Drehschieberventil (3) und einen Stellmotor (10) verfügt, wobei jedes der Drehschieberventile (2,3) einen in einem Drehschiebergehäuse angeordneten und über eine Antriebswelle (11) mittels des Stellmotors (10) antreibbaren Drehschieber (6,7) aufweist, wobei das erste Drehschieberventil (2) starr und das zweite Drehschieberventil (3) über einen Freilauf (12) mit der Antriebswelle (11) gekoppelt ist, und wobei mittels des Stellmotors (10) das erste Drehschieberventil (2) auf einen ersten Sollwert und das zweite Drehschieberventil (3) auf einen zweiten Sollwert eingestellt wird, **dadurch gekennzeichnet, dass** der Freilauf (12) über das erste Drehschieberventil (2) lediglich mittelbar mit der Antriebswelle (11) gekoppelt ist.

8. Verfahren nach Anspruch 7, **dadurch gekennzeichnet, dass** zunächst das Einstellen des zweiten Drehschieberventils (3) durch Drehen der Antriebswelle (11) entgegen einer Freilaufrichtung des Freilaufs (12) und anschließend das Einstellen des ersten Drehschieberventils (2) durch Drehen der Antriebswelle (11) in Freilaufrichtung erfolgt.

9. Verfahren nach einem der Ansprüche 7 oder 8, **dadurch gekennzeichnet, dass** zum Einstellen des zweiten Drehschieberventils (3) auf den zweiten Sollwert der Stellmotor (10) derart betrieben wird, dass das erste Drehschieberventil (2) abwechselnd in gegenläufige Richtungen auf von dem ersten Sollwert abweichende Werte eingestellt wird, bis der zweite Sollwert für das zweite Drehschieberventil (3) vorliegt.

## Claims

1. Fluid-technical valve device (1), which has a first rotary slide valve (2), a second rotary slide valve (3) and a servomotor (10), wherein each of the rotary slide valves (2,3) comprises a rotary slide (6,7) arranged in a rotary slide housing and drivable via a drive shaft (11) by means of the servomotor (10), wherein the first rotary slide valve (2) is rigidly coupled to the drive shaft (11) and the second rotary slide valve (3) is coupled to the drive shaft (11) via a freewheel (12), **characterised in that** the freewheel (12) is only indirectly coupled to the drive shaft (11) via the first rotary slide valve (2).

2. Fluid-technical valve device according to claim 1, **characterised in that** the first rotary slide valve (2) comprises a first coupling device (15) and the second rotary slide valve (3) comprises a second coupling device (16), wherein the first coupling device (15) and the second coupling device (16) are each coupled to the freewheel (12).

3. Fluid-technical valve device according to claim 2, **characterised in that** the first coupling device (15) is coupled to an input of the freewheel (12) coupled to the drive shaft (11) and the second coupling device (16) is coupled to an output of the freewheel (12).

4. Fluid-technical valve device according to one of the preceding claims, **characterised in that** the first coupling device (15) is coupled to the input of the freewheel (12) via the drive shaft (11) or to the drive shaft (11) via an input coupling device (17) of the input of the freewheel (12).

5. Fluid-technical valve device according to claim 4, **characterised in that** the first coupling device (15) is directly coupled at least temporarily to the drive shaft (11) and/or the input coupling device (17) of the freewheel (12) and the second coupling device (16) is permanently coupled to an output coupling device (18) of the freewheel (12).

6. Fluid-technical valve device according to claim 5, **characterised in that** the first coupling device (15), the second coupling device (16), the input coupling device (17) and the output coupling device (18) each have a toothing or are designed as such.

7. Method for operating a fluid-technical valve device (1), in particular a fluid-technical fluid device (1) according to one or more of the preceding claims, wherein the fluid-technical valve device (1) has a first rotary slide valve (2), a second rotary slide valve (3) and a servomotor (10), wherein each of the rotary slide valves (2,3) comprises a rotary slide (6,7) arranged in a rotary slide housing and drivable via a drive shaft (11) by means of the servomotor (10), wherein the first rotary slide valve (2) is rigidly coupled to the drive shaft (11) and the second rotary slide valve (3) is coupled to the drive shaft (11) via a freewheel (12), and wherein by means of the servomotor (10) the first rotary slide valve (2) is set to a first setpoint value and the second rotary slide valve (3) is set to a second setpoint value, **characterised in that** the freewheel (12) is only indirectly coupled to the drive shaft (11) via the first rotary slide valve (2).

8. Method according to claim 7, **characterised in that** the second rotary slide valve (3) is first set by rotating the drive shaft (11) against a freewheeling direction of the freewheel (12) and then the first rotary slide valve (2) is set by rotating the drive shaft (11) in the freewheeling direction.

9. Method according to one of claims 7 or 8, **characterised in that,** to set the second rotary slide valve (3) to the second setpoint value, the servomotor (10) is operated in such a way, that the first rotary slide valve (2) is set alternately in opposite directions to values deviating from the first setpoint value until the second setpoint value for the second rotary slide valve (3) is present.

## Revendications

1. Dispositif de soupape fluidique (1) qui dispose d'une première soupape à tiroir rotatif (2), d'une deuxième soupape à tiroir rotatif (3) et d'un servomoteur (10), dans lequel chacune des soupapes à tiroir rotatif (2, 3) présente un tiroir rotatif (6, 7) agencé dans un logement de tiroir rotatif et pouvant être entraîné par l'intermédiaire d'un arbre d'entraînement (11) au moyen du servomoteur (10), dans lequel la première soupape à tiroir rotatif (2) est couplée à l'arbre d'entraînement (11) de manière rigide et la deuxième soupape à tiroir rotatif (3) est couplée à celui-ci par l'intermédiaire d'une roue libre (12), **caractérisé en ce que** la roue libre (12) est couplée à l'arbre d'entraînement (11) uniquement de manière indirecte par l'intermédiaire de la première soupape à tiroir rotatif (2).

2. Dispositif de soupape fluidique selon la revendication 1, **caractérisé en ce que** la première soupape à tiroir rotatif (2) présente un premier dispositif de couplage (15) et la deuxième soupape à tiroir rotatif (3) présente un deuxième dispositif de couplage (16), dans lequel le premier dispositif de couplage (15) et le deuxième dispositif de couplage (16) sont respectivement couplés à la roue libre (12).

3. Dispositif de soupape fluidique selon la revendication 2, **caractérisé en ce que** le premier dispositif de couplage (15) est couplé à une entrée de la roue libre (12) couplée à l'arbre d'entraînement (11) et le deuxième dispositif de couplage (16) est couplé à une sortie de la roue libre (12).

4. Dispositif de soupape fluidique selon l'une quelconque des revendications précédentes, **caractérisé en ce que** le premier dispositif de couplage (15) est couplé à l'entrée de la roue libre (12) par l'intermédiaire de l'arbre d'entraînement (11) ou est couplé à l'arbre d'entraînement (11) par l'intermédiaire d'un dispositif de couplage d'entrée (17) de l'entrée de la roue libre (12).

5. Dispositif de soupape fluidique selon la revendication 4, **caractérisé en ce que** le premier dispositif de couplage (15) est couplé directement au moins de manière temporaire à l'arbre d'entraînement (11) et/ou au dispositif de couplage d'entrée (17) de la roue libre (12) et le deuxième dispositif de couplage (16) est couplé directement et en permanence à un dispositif de couplage de sortie (18) de la roue libre (12).

6. Dispositif de soupape fluidique selon la revendication 5, **caractérisé en ce que** le premier dispositif de couplage (15), le deuxième dispositif de couplage (16), le dispositif de couplage d'entrée (17) et le dispositif de couplage de sortie (18) présentent chacun une denture, ou sont conçus comme tels.

7. Procédé permettant de faire fonctionner un dispositif de soupape fluidique (1), en particulier un dispositif de fluide fluidique (1) selon une ou plusieurs des revendications précédentes, dans lequel le dispositif de soupape fluidique (1) dispose d'une première soupape à tiroir rotatif (2), d'une deuxième soupape à tiroir rotatif (3) et d'un servomoteur (10), dans lequel chacune des soupapes à tiroir rotatif (2, 3) présente un tiroir rotatif (6, 7) agencé dans un logement de tiroir rotatif et pouvant être entraîné par l'intermédiaire d'un arbre d'entraînement (11) au moyen du servomoteur (10), dans lequel la première soupape à tiroir rotatif (2) est couplée à l'arbre d'entraînement (11) de manière rigide et la deuxième soupape à tiroir rotatif (3) est couplée à celui-ci au moyen d'une roue libre (12), et dans lequel la première soupape à tiroir rotatif (2) est réglée à une première valeur de consigne et la deuxième soupape à tiroir rotatif (3) à une deuxième valeur de consigne au moyen du servomoteur (10), **caractérisé en ce que** la roue libre (12) est couplée à l'arbre d'entraînement (11) uniquement de manière indirecte par l'intermédiaire de la première soupape à tiroir rotatif (2).

8. Procédé selon la revendication 7, **caractérisé en ce que** le réglage de la deuxième soupape à tiroir rotatif (3) s'effectue d'abord par rotation de l'arbre d'entraînement (11) à l'encontre d'une direction de roue libre de la roue libre (12), puis le réglage de la première soupape à tiroir rotatif (2) s'effectue par rotation de l'arbre d'entraînement (11) dans la direction de roue libre.

9. Procédé selon la revendication 7 ou 8, **caractérisé en ce que** pour régler la deuxième soupape à tiroir rotatif (3) à la deuxième valeur de consigne, le servomoteur (10) est actionné de telle sorte que la première soupape à tiroir rotatif (2) est réglée alternativement dans des directions opposées à des valeurs différentes de la première valeur de consigne jusqu'à ce que la deuxième valeur de consigne pour la deuxième soupape à tiroir rotatif (3) soit disponible.
